# EUROPEAN PATENT SPECIFICATION

(11) **EP 4 000 755 B1**
(45) Date of publication and mention of the grant of the patent: **11.12.2024**
(21) Application number: 21207114.6
(22) Date of filing: 09.11.2021
(51) Int. Cl.: B08B 9/08, B08B 9/093, B01D 21/24

(54) **ROBOT FOR THE SUCTION OF SLUDGE AND MATERIALS, FOR EMPTYING DIGESTERS FOR THE PRODUCTION OF BIOGAS**
ROBOTER ZUM ABSAUGEN VON SCHLAMM UND MATERIALIEN, ZUM ENTLEEREN VON GÄRGERÄTEN FÜR DIE ERZEUGUNG VON BIOGAS
ROBOT POUR L'ASPIRATION DE BOUES ET DE MATÉRIAUX, POUR LA VIDANGE DE DIGESTERS POUR LA PRODUCTION DE BIOGAZ

(30) Priority: 11.11.2020 IT 202000026990
(43) Date of publication of application: 25.05.2022
(73) Proprietor: Corradi & Ghisolfi Srl, 26010 Corte de' Frati (CR) (IT)
(72) Inventor: Corradi, Paolo, Corte De' Frati (CR) (IT); Corradi, Bruno, Corte De' Frati (CR) (IT)
(74) Representative: Fezzardi, Antonio

(56) References cited:
- EP-A1- 0 275 690
- WO-A2-2012/150541
- DE-A1- 10 237 431
- NL-A- 8 300 142
- US-A- 5 645 232
- US-A- 6 141 810
- US-B1- 7 704 128

## Description

The present invention relates to the field of plants for the production of biogas, which can be generated by the digestion of sludge, sewage, and organic substances in general, or can come from the fumes of slurry collection tanks containing fermentable material. It is known that such plants require ongoing management to adjust the biogas production, which comprises maintenance, and under certain circumstances, emptying and/or cleaning.

Indeed, the biogas production yield is optimized if the plant can perform an accurate and efficient anaerobic digestion but this requires, in addition to normal maintenance, a thorough cleaning (when required) of the fermenters and the anaerobic digesters to keep the digestion process efficient.

These are costly operations, which require stopping the plant and using highly specialized personnel, capable of managing the issues as for the gases and fumes of the material contained in the digesters to be cleaned.

Emptying systems are known, which provide for the suction of material by means of a suction excavator, which allows emptying even high-capacity digesters in a very short time. The suction is preferably of the dry suction type, which sucks up the settled material in the absence of water and the material is conveyed to a collection bin. With this technique, during the plant shutdown, the suction excavator - which sucks up the material through special openings - is positioned outside the digester; when most of the material has been sucked up, cleaning is completed using a mini-excavator, preferably robotic, which takes the material closer to the mouth of the suction tube with its bucket.

However, this known method requires the complete removal of the digester tank cover fabric both to use the suction excavator and to place the mini-excavator at the bottom of the digester.

The document NL8300142 A discloses a system in accordance with the preamble of claim 1.

It is one of the objects of the invention to allow the complete cleaning of the digester avoiding the need to remove the cover of the digester itself, thus reducing time and costs for cleaning and plant shutdown.

This has been achieved, according to the present invention, by the system in accordance with claim 1, which comprises using a crawler robot, preferably hydraulically operated, which is remotely controllable or driven by an operator sitting thereon, which is insertable into the digester through the so-called "manholes" pipes normally existing on the side walls of the tanks of digesters for the biogas production. Said robot is provided with a swiveling suction nose which is directly connectable to a normal suction tube of the material suction plant.

A better understanding of the invention will be achieved by means of the following detailed description and with reference to the accompanying figures, which illustrate some preferred embodiments by way of non-limiting examples.

In the drawings:

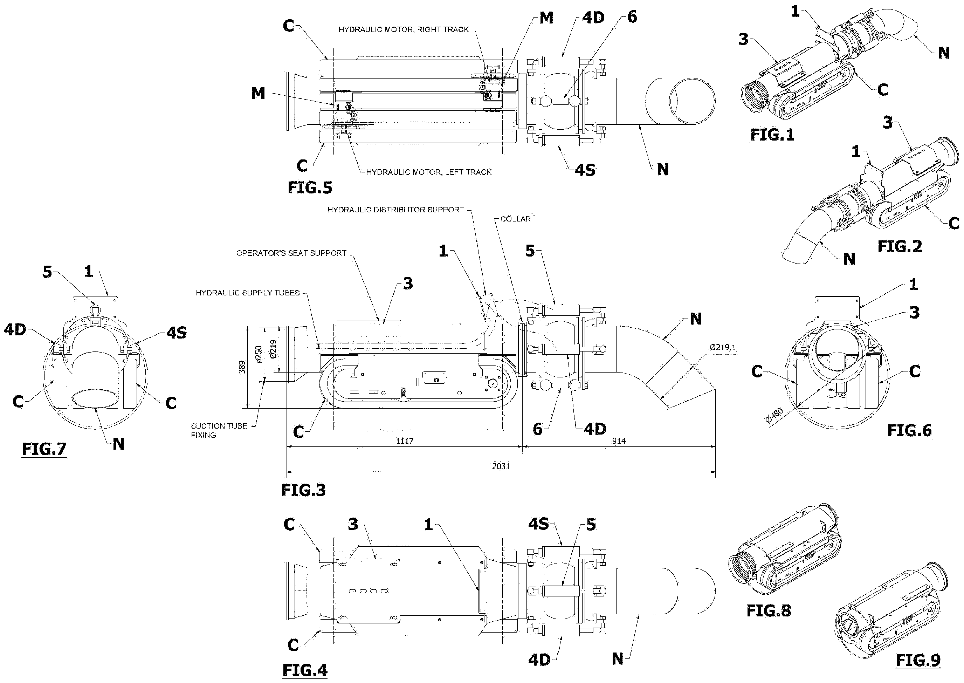

figures 1 and 2 are 3D views, from the rear and front, respectively, showing the main components of a first embodiment of the crawler robot according to the present invention;
figure 3 is a side view of the crawler robot in figures 1 and 2;
figures 4 and 5 are a top and a bottom view of the robot in fig. 3, respectively;
figures 6 and 7 are a rear and a front elevation view of the robot in fig. 3, respectively;
figures 8 and 9, similar to figures 1 and 2, show the crawler robot in its "minimum" configuration, free from its removable parts to pass through a manhole with a minimum diameter of 480 mm;

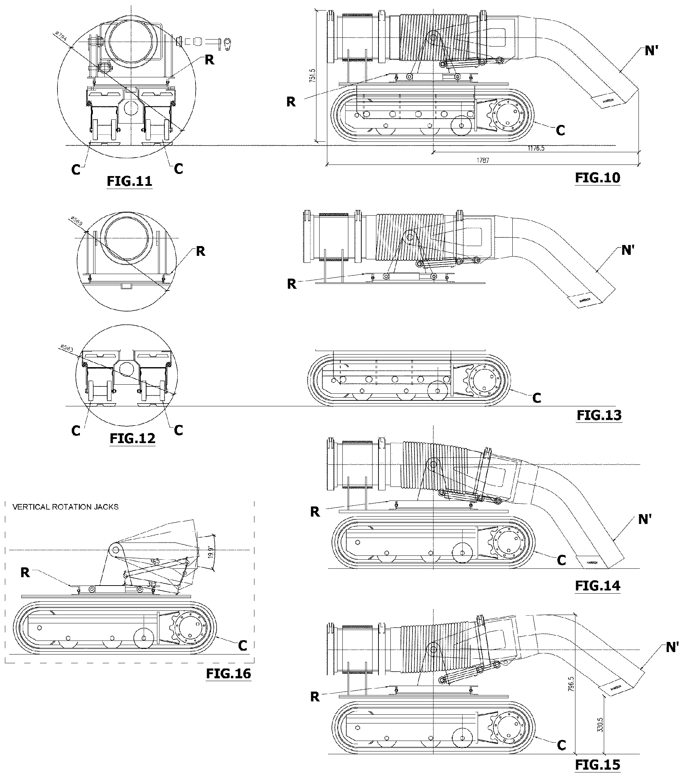

figure 10 is a side view of a second embodiment of the crawler robot in a complete configuration;
figure 11 is an elevation view from the rear side of the crawler robot in fig. 10, in a "minimal" assembled configuration, free from the removable parts to pass through a manhole with a minimum diameter of 800 mm;
figures 12 and 13 show a rear and side view, respectively, of the two upper and lower parts in which the crawler robot of fig. 10 is removable to pass through a manhole with a minimum diameter of 580 mm;
figures 14 and 15, similar to fig. 11, show the crawler robot in fig. 10 with the movable nose lowered and raised, respectively;
figure 16 diagrammatically shows the means for moving the nose of the crawler robot in fig. 10 in a vertical direction.

With reference to figures from 1 to 9, a first embodiment of the invention provides a crawler robot having particularly small crosswise dimensions, such as to allow it to pass through a manhole having a minimum diameter of just 48 cm.

For this purpose, the robot has a main body provided with two tracks C, as well as with a longitudinal suction pipe to the front of which a swivel nose N is fixable and to the rear of which a suction tube is fixable, whereby the system is characterized in that said main body has a particular structural configuration in which:
- in order to reduce the minimum distance between the two right and left tracks C, the hydraulic motors M driving them are mounted to the front and rear sides of the main body, respectively, in a mutually overturned position, with the motor body M facing inwards and the ring gear, meshing with the track C, facing outwards;
- the swiveling nose N is removable from the pipe present in the main body, a quick release/coupling collar being provided for this purpose;
- the support 1 for the hydraulic distributor 2, to control the movement means of the suction nose N and the motors M of the tracks C, is easily and quickly removable for the passage through the manhole;
- the support for the operator's seat, if present, is easily and quickly removable for the passage through the manhole.

In the described embodiment, the nose N consists of a fixed part (applied to the main body pipe with a quick-release collar) and a movable part: a rubber compensator joint is interposed between said fixed and movable parts.

A second particular feature of the invention is that said swiveling nose N is provided with movement means for orienting it in the desired direction, consisting of at least three hydraulic jacks 4D, 4S, 5, which are arranged at 120° (not shown) or, more preferably, are arranged at 90° relative to one another along two diameters, in particular on the right, left and upper side of the horizontal stretch of the nose N, while on the lower side a fixed-length connection/constraint element 6 with two end hinges is simply provided. In the preferred embodiment shown in the figures from 1 to 9, angular spherical joints with threaded pin are applied at the ends of each of said jacks 4D, 4S, 5, and the lower element 6 consists instead of two axial spherical joints arranged mutually in series.

In this preferred configuration, shown in figures from 1 to 9, the two hydraulic jacks, right 4D and left 4S, control the movements in the horizontal direction of the front part of the nose N, while the upper jack 5 controls the movements in the vertical direction. The lower point of the nose N, opposite to the upper jack 5, supports the joint of the movable part of the nose N during its movement.

Advantageously, with the configuration described so far, the nose N which forms the end of the suction tube can move in space in an "orbital" manner, similar to a homokinetic joint.

From the drawings and the present descriptions, it is apparent that the crawler robot according to the present invention is a very compact machine with a main body comprising a material suction pipe consisting of a tube with a nominal diameter of 21.9 cm obtained by reducing the material passage area of only 10%. Advantageously, such a reduction of the passage area occurs only in the stretch corresponding to the main body of the machine, wherein the tube is appropriately configured to facilitate the housing of the tracks C.

The compactness of the machine advantageously allows the possibility to start working in the digester to be emptied after the provision of a small maneuvering space.

According to an embodiment, not in accordance with the invention, shown in the figures from 10 to 15, a crawler robot is made in two (upper and lower) parts with rapid assembly/disassembly, to be inserted through a manhole with a minimum diameter of only 58 cm. In the example shown in figures from 10 to 15, the lower part comprising the tracks C passes through a diameter of 58 cm (or a rectangular area with 50x42 cm sides) while the upper part comprising the nose N passes through a diameter of 57 cm (or a rectangular area with 50x34 cm sides); if the machine were not divided into the above two parts, it would pass through a diameter of 80 cm.

For this purpose, the robot has a lower part provided with two tracks C to which an upper part comprising a longitudinal suction pipe, centrally articulated and provided with a front nose N' is assemblable, where said upper part is rotatably constrainable to the lower one by means of a slewing ring preferably provided with balls, the rotation of which is determined by the action of two hydraulic cylinders mounted in an opposed manner therein, which allow the rotation of an overall angle preferably of about 120° (60° rightwards and 60° leftwards), while the upper part is provided with means for varying the inclination of the front nose N' in the vertical direction by means of said central joint of the longitudinal suction pipe. Said means for varying the inclination of the nose N' are preferably hydraulically operated, e.g., by means of at least one jack, but an arc of a ring gear meshing with the pinion of a hydraulic motor could also be used.

Advantageously, the robot of this embodiment is overall very compact both in width and in length because the suction nose N' is movable in the horizontal direction by means of said slewing ring, and in the vertical direction through the means for varying the inclination of the nose N'. Preferably, the entire robot is remotely actuatable by radio control and is movable on the ground by means of said two tracks C, while the rear part of the longitudinal suction pipe, centrally articulated, is connectable at the rear to a material suction tube.

The present invention was described and illustrated with reference to a preferred embodiment but it is apparent that any person skilled in the art may make modifications and/or substitutions thereto which are functionally and/or technically equivalent, without departing from the scope of protection of the invention, which is delimited by the appended claims.

Finally, it is worth noting that the field of use of this disclosure is not advantageously limited only to the biogas plant field; the mini-robot can be used wherever there is a need to extract any type of liquid or muddy material, debris, gravel, steel mill waste, dust, from narrow places, which are difficult to access by other means, with little room for maneuver. Furthermore, the disclosure is also very useful in purification plants, where the fixtures at the bottom of the tank do not allow entering with large-sized self-propelled means.

## Claims

1. A system for the suction of sludge, or debris, or sludge and debris contained in tanks or digesters for the production of biogas, which is provided with means for connecting to a suction tube of a suction system, such as a purging truck, comprising a crawler robot which is provided with remote controlling means or with driving means for an operator sitting thereon, which robot is configured to be inserted through the so-called manhole pipes normally present in the side walls of the digester tanks for the production of biogas; wherein said robot is provided with a swiveling suction nose (N, N'), which is directly connected to a suction tube of the material suction system; and wherein two parallel and longitudinal tracks (C) driven by respective motors (M) are provided, wherein said robot has a main body provided with two parallel and longitudinal tracks (C), as well as with a longitudinal suction pipe to the front of which a swiveling nose (N) is fixable and to the rear of which a suction tube is fixable, **characterized in that** said main body has a particular structural configuration in which:
- in order to reduce the minimum distance between the two right and left tracks (C), the motors (M) driving them are mounted to the front and rear sides of the main body, respectively, in a mutually overturned position, with the motor body (M) facing inwards and a corresponding ring gear, meshing with the track (c), facing outwards;
- the swiveling nose (N) is removable from the pipe present in the main body, a quick release/coupling collar being provided for this purpose;
- a support (1) for a hydraulic distributor (2), to control the movement means of the suction nose (N) and the motors (M) of the tracks (C), is configured to be removed for the passage through the manhole;
- a support for the operator's seat is configured to be removed for the passage through the manhole;
**and wherein** said swiveling nose (N) is provided with movement means for orienting it in the desired direction, consisting of at least three hydraulic jacks (4D, 4S, 5) which are arranged at 120° or are arranged at 90° relative to one another along two diameters, in particular on the right, left and upper sides of a horizontal section of the nose (N), while a fixed-length connection/constraint element (6) with two end hinges is provided on the lower side.

2. A system according to the preceding claim, **characterized in that** said nose (N) consists of a fixed part, which is connectable to the main body pipe with a quick-release collar, and a movable part; wherein a rubber compensator joint is interposed between said fixed and movable parts.

3. A system according to claim 1 or 2, **characterized in that** angular spherical joints with threaded pin are applied at the ends of each of said jacks (4D, 4S, 5) arranged at 90° and the lower element (6) consists of two axial spherical joints arranged mutually in series.

4. A system according to the preceding claim, **characterized in that** the two right (4D) and left (4S) hydraulic jacks are configured to control the movements in the horizontal direction of the front part of the nose (N), while the upper jack (5) is configured to control the movements in the vertical direction; wherein the lower point of the nose (N), opposite to the upper jack (5), is configured to support the joint of the movable part of the nose (N) during its movement.

5. A system according to one of the preceding claims, **characterized in that** said nose (N), which forms the front end of the suction tube connected to the robot, is movable in space in an orbital manner, similar to a homokinetic joint.

6. A system according to one of the preceding claims, **characterized in that** said crawler robot is a compact machine with a main body comprising a material suction pipe consisting of a tube with a nominal diameter of 21.9 cm made by providing for a reduction of the material passage area of only 10%; wherein such a reduction of the passage area is provided for only in the section corresponding to the main body of the machine, where the tube is conveniently configured to facilitate the housing of the tracks (C).

## Patentansprüche

1. System zur Absaugung von Schlämmen oder Abfällen oder von Schlämmen und Abfällen, die in Behältern oder Faultürmen zur Erzeugung von Biogas enthalten sind, das mit Mitteln zum Anschluss an ein Saugrohr eines Saugsystems, z.B. eines Spülwagens, versehen ist, mit einem Raupenroboter, der mit Fernsteuerungsmitteln oder mit Antriebsmitteln für einen darauf sitzenden Bediener ausgestattet ist, wobei der Roboter so konfiguriert ist, dass er durch die so genannten Mannlochrohre eingeführt werden kann, die normalerweise in den Seitenwänden der Fermenter für die Biogaserzeugung vorhanden sind; wobei der Roboter mit einer schwenkbaren Saugnase (N, N') versehen ist, die direkt mit einem Saugrohr des Materialsaugsystems verbunden ist; und wobei zwei parallele und in Längsrichtung verlaufende Laufketten (C) vorgesehen sind, die von entsprechenden Motoren (M) angetrieben werden, wobei der Roboter einen Hauptkörper aufweist, der mit zwei parallelen und in Längsrichtung verlaufenden Laufketten (C) sowie mit einem in Längsrichtung verlaufenden Saugrohr versehen ist, an dessen Vorderseite eine schwenkbare Nase (N) und an dessen Rückseite ein Saugrohr befestigt werden kann, **dadurch gekennzeichnet, dass** der Hauptkörper eine besondere strukturelle Anordnung aufweist, bei der gilt:
- um den Mindestabstand zwischen der rechten und der linken Laufkette (C) zu verringern, sind die Motoren (M), die sie antreiben, an der Vorder- bzw. Rückseite des Hauptkörpers in einer zueinander gekippten Position angebracht, mit dem Motorkörper (M) nach innen und einem entsprechenden Zahnkranz, der in die Laufkette (C) eingreift, nach außen;
- die Schwenknase (N) kann von dem im Hauptkörper befindlichen Rohr abgenommen werden, wozu eine Schnellkupplungsmuffe vorgesehen ist;
- ein Träger (1) für einen hydraulischen Verteiler (2) zur Steuerung der Bewegungsmittel der Saugnase (N) und der Motoren (M) der Laufketten (C) ist so konfiguriert, dass er für den Durchlass durch das Mannloch entfernt werden kann;
- eine Halterung für den Fahrersitz ist so konfiguriert, dass sie für den Durchgang durch das Mannloch entfernt werden kann;
und wobei die schwenkbare Nase (N) mit Bewegungsmitteln versehen ist, um sie in die gewünschte Richtung auszurichten, die aus mindestens drei Hydraulikzylindern (4D, 4S, 5) bestehen, die in einem Winkel von 120° oder in einem Winkel von 90° zueinander entlang zweier Durchmesser angeordnet sind, insbesondere auf der rechten, linken und oberen Seite eines horizontalen Abschnitts der Nase (N), während an der Unterseite ein Verbindungselement (6) mit fester Länge und zwei Endscharnieren vorgesehen ist.

2. System nach dem vorhergehenden Anspruch, **dadurch gekennzeichnet, dass** die Nase (N) aus einem festen Teil, der mit dem Hauptkörperrohr mit einem Schnellverschluss verbunden werden kann, und einem beweglichen Teil besteht; wobei zwischen dem festen und dem beweglichen Teil ein Gummikompensatorgelenk angeordnet ist.

3. System nach Anspruch 1 oder 2, **dadurch gekennzeichnet, dass** an den Enden jeder der um 90° angeordneten Zylinder (4D, 4S, 5) winkelförmige Kugelgelenke mit Gewindestift angebracht sind, und dass das untere Element (6) aus zwei axialen Kugelgelenken besteht, die in Reihe zueinander angeordnet sind.

4. System nach dem vorhergehenden Anspruch, **dadurch gekennzeichnet, dass** die beiden rechten (4D) und linken (4S) Hydraulikzylinder so konfiguriert sind, dass sie die Bewegungen in horizontaler Richtung des vorderen Teils der Nase (N) steuern, während der obere Zylinder (5) für die Steuerung der Bewegungen in vertikaler Richtung ausgelegt ist; wobei der untere Punkt der Nase (N), der dem oberen Zylinder (5) gegenüberliegt, so gestaltet ist, dass er das Gelenk des beweglichen Teils der Nase (N) während seiner Bewegung stützt.

5. System nach einem der vorhergehenden Ansprüche, **dadurch gekennzeichnet, dass** die Nase (N), die das vordere Ende des Saugrohres bildet, das mit dem Roboter verbunden ist, einem homokinetischen Gelenk ähnelt.

6. System nach einem der vorhergehenden Ansprüche, **dadurch gekennzeichnet, dass** der Raupenroboter eine kompakte Maschine mit einem Hauptkörper ist, der ein Materialansaugrohr umfasst, das aus einem Rohr mit einem Nenndurchmesser von 21,9 cm besteht und durch eine Reduzierung der Materialdurchgangsfläche um nur 10 % hergestellt wurde; wobei eine solche Verkleinerung des Durchgangsbereichs nur in dem Abschnitt vorgesehen ist, der dem Hauptkörper der Maschine entspricht, wobei das Rohr so gestaltet ist, dass es die Aufnahme der Laufketten (C) erleichtert.

## Revendications

1. Système d'aspiration de boues, ou de débris, ou de boues et de débris contenus dans des réservoirs ou des digesteurs pour la production de biogaz, qui est doté de moyens de raccordement à un tube d'aspiration d'un système d'aspiration, tel qu'un camion de purge, comprenant un robot à chenilles qui est doté de moyens de commande à distance ou de moyens d'entraînement pour un opérateur assis dessus, lequel robot est configuré pour être inséré à travers ce qu'on appelle les tuyaux de trou d'homme normalement présents dans les parois latérales des cuves de digestion pour la production de biogaz ; dans lequel ledit robot est doté d'un nez d'aspiration pivotant (N, N'), qui est raccordé directement à un tube d'aspiration du système d'aspiration de matériaux ; et dans lequel deux chemins de roulement (C) parallèles et longitudinaux entraînés par des moteurs (M) respectifs sont prévus, dans lequel ledit robot a un corps principal doté de deux chemins de roulement (C) parallèles et longitudinaux, ainsi que d'un tube d'aspiration longitudinal à l'avant duquel peut être fixé un nez pivotant (N) et à l'arrière duquel peut être fixé un tube d'aspiration, **caractérisé en ce que** ledit corps principal présente une configuration structurelle particulière dans laquelle :
- afin de réduire la distance minimale entre les deux chemins de roulement (C) droit et gauche, les moteurs (M) qui les entraînent sont montés respectivement sur les côtés avant et arrière du corps principal, dans une position de renversement mutuel, le corps du moteur (M) tourné vers l'intérieur et une couronne dentée correspondante, s'engrenant avec le chemin de roulement (C), tourné vers l'extérieur ;
- le nez pivotant (N) est amovible du tuyau présent dans le corps principal, un collier à dégagement/couplage rapide étant prévu à cet effet ;
- un support (1) pour un distributeur hydraulique (2), pour commander les moyens de mouvement du nez d'aspiration (N) et les moteurs (M) des chemins de roulement (C), est configuré pour être enlevé pour le passage à travers le trou d'homme ;
- un support pour le siège de l'opérateur est configuré pour être enlevé pour le passage à travers le trou d'homme ;_et dans lequel ledit nez pivotant (N) est doté de moyens de mouvement pour l'orienter dans la direction souhaitée, constitués d'au moins trois vérins hydrauliques (4D, 4S, 5) qui sont agencés à 120° ou sont agencés à 90° les uns par rapport aux autres le long de deux diamètres, en particulier sur les côtés droit, gauche et supérieur d'une section horizontale du nez (N), tandis qu'un élément (6) de raccordement/contrainte de longueur fixe avec deux charnières d'extrémité est prévu sur le côté inférieur.

2. Système selon la revendication précédente, **caractérisé en ce que** ledit nez (N) est constitué d'une partie fixe, qui peut être raccordée au tuyau de corps principal avec un collier à dégagement rapide, et d'une partie mobile ; dans lequel un joint compensateur en caoutchouc est interposé entre lesdites parties fixe et mobile.

3. Système selon la revendication 1 ou 2, **caractérisé en ce que** des joints sphériques angulaires avec goupille filetée sont appliqués aux extrémités de chacun desdits vérins (4D, 4S, 5) agencés à 90° et l'élément (6) inférieur est constitué de deux joints sphériques axiaux agencés mutuellement en série.

4. Système selon la revendication précédente, **caractérisé en ce que** les deux vérins hydrauliques droit (4D) et gauche (4S) sont configurés pour commander les mouvements dans la direction horizontale de la partie avant du nez (N), tandis que le vérin supérieur (5) est configuré pour commander les mouvements dans la direction verticale ; dans lequel le point inférieur du nez (N), opposé au vérin supérieur (5), est configuré pour supporter le joint de la partie mobile du nez (N) pendant son mouvement.

5. Système selon l'une des revendications précédentes, **caractérisé en ce que** ledit nez (N), qui forme l'extrémité avant du tube d'aspiration raccordé au robot, est mobile dans l'espace de manière orbitale, similaire à un joint homocinétique.

6. Système selon l'une des revendications précédentes, **caractérisé en ce que** ledit robot à chenilles est une machine compacte ayant un corps principal comprenant un tuyau d'aspiration de matériaux constitué d'un tube avec un diamètre nominal de 21,9 cm réalisé en prévoyant une réduction de l'aire de passage de matériaux de seulement 10 % ; dans lequel une telle réduction de l'aire de passage est prévue uniquement dans la section correspondant au corps principal de la machine, où le tube est configuré de manière pratique pour faciliter le logement des chemins de roulement (C).
